# EUROPEAN PATENT APPLICATION

(11) **EP 2 679 917 A1**
(43) Date of publication of application: **01.01.2014**
(21) Application number: 13003247.7
(22) Date of filing: 26.06.2013
(51) Int. Cl.: F24D 17/00, F24C 13/00

(54) **Heat recovery system from a pizza oven or the like**

(30) Priority: 27.06.2012 IT TO20120568
(71) Applicant: Corallini, Gianandrea, 11025 Gressoney Saint Jean (AO) (IT); Laurent, Francesco, 11025 Gressoney Saint Jean (AO) (IT)
(72) Inventor: Corallini, Gianandrea, 11025 Gressoney Saint Jean (AO) (IT); Laurent, Francesco, 11025 Gressoney Saint Jean (AO) (IT)
(74) Representative: Aprà, Mario

(57) **Abstract**

A heat recovery system 100 from a pizza oven or the like F, comprising:
- an open-pit chamber 10, containing said pizza oven or the like F, constituted by a structural unit not communicating with said chamber 10, with opening A passing through a wall of said chamber 10;
- a storage tank for domestic hot water or the like 11, connected in a hydraulic circuit with respect to at least one hot water user R;

in which:
- first hydraulic serpentine coil means 12, placed above said oven F, in said chamber 10, and hydraulically connected with respect to second hydraulic serpentine coil means 13, arranged in said storage tank 11, in direct or indirect contact with the domestic hot water contained therein, said first 12 and said second 13 hydraulic serpentine coil means forming a closed loop hydraulic circuit C;
- a heat storage fluid, circulating in said first 12 and in said second 13 hydraulic serpentine coil means, and
- hydraulic pump means 14 for forced recirculation of said heat storage fluid in said closed loop hydraulic circuit C.

## Description

The present invention relates to a heat recovery system from a pizza oven or the like.

The document n. CA1172117 discloses an heat recovery system from a pizza oven or the like, installed in a fireplace joined to the same oven, in order to replace or improve a pre-existing water heating system. Said known system has a pump, powered by an electric motor, which makes the water circulate in a closed circuit generated between a storage tank and heat exchanging pipes, placed in said fireplace. A thermostat control system automatically starts said pump as soon as it detects the reaching of a certain actual water heating temperature; in the same moment in which the water temperature inside said tank reaches a certain pre-determined maximum threshold, said thermostat determines said pump to stop and at the same time the opening of a exhaust valve, so obtaining the rapid discharge of the heated water from said pipes.

However, the structure of said know system results of difficult realization and standardization and also requires, for its installation and following maintenance, rather invasive construction operations.

Adding to this, said know system presents evident limitations that do not allow the heat storage at temperatures higher than the water boiling one, and require automated means that, once detected the reaching of a temperature close to the water boiling one, determine the opening of apposite exhaust valves of said fluid, in order to obtain its flowing out.

On the other hand, the structure of said know system is inevitably complex, of difficult assembly and almost expensive. The present invention, starting from the notion of the aforesaid problems, intends to provide a solution.

An object of the present invention is to provide an heat recovery system from a pizza oven or the like, that allows a good level of adaptability and standardization, and the installation and following maintenance of which do not require relevant construction operations.

A further object of the present invention is to provide an heat recovery system as said, which allows to recover heat even at temperatures higher than the water boiling one.

It is also an object of the present invention to provide an heat recovery system as mentioned, having a simple structure, of easy assembly and relatively low costs.

In view of these objects, the present invention provides an heat recovery system from a pizza oven or the like, the essential characteristic of which forms the subject of claim 1.

Further advantageous characteristics of the invention are described in the dependent claims.

The aforesaid claims are intended as fully incorporated herein. These and other objects, characteristics and advantages of the present invention will be more apparent from the detailed description below with reference to the accompanying drawing, provided purely by way of non-limiting example, wherein:
- Figure 1 is a schematic view of an heat recovery system from a pizza oven or the like, according to an embodiment of the present invention (please note that in said Figure the pizza oven is not illustrated, but it is ideally located under a serpentine here illustrated).
- Figure 2 is a schematic exploded perspective view of a pizza oven or the like, used (but not illustrated) in the system of Figure 1.

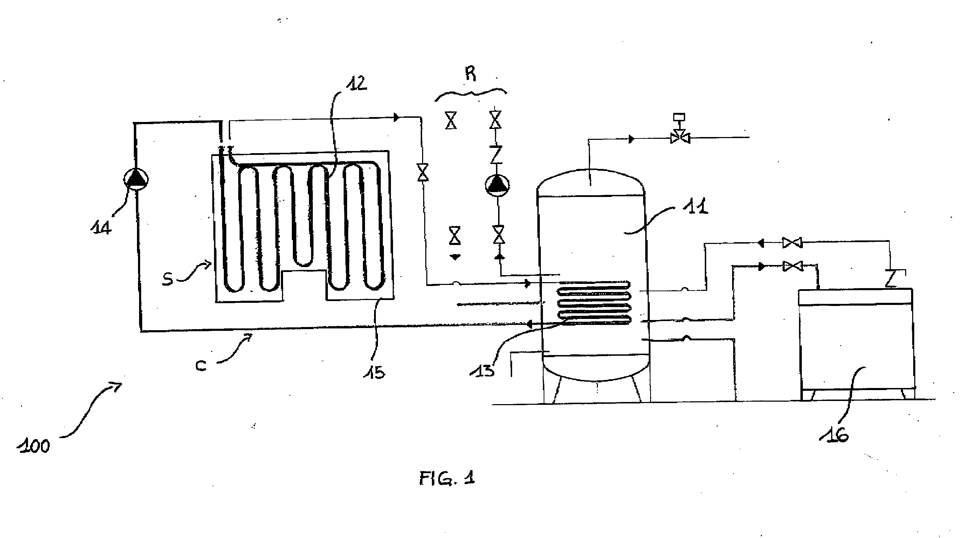

In said Figure 1, with 100 is indicated an heat recovery system from a pizza oven or the like, according to an embodiment of the present invention.

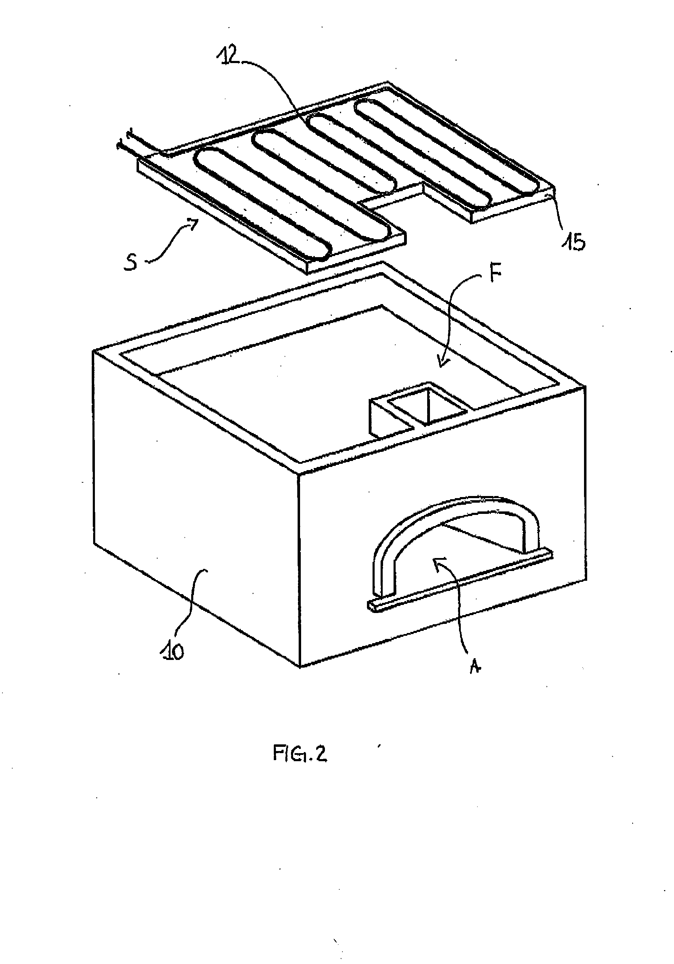

Said heat recovery system 100 from a pizza oven or the like F, comprises:
- an open-pit chamber 10 (Figure 2), containing said pizza oven or the like F, constituted by a structural unit not communicating with said chamber 10, with opening A passing through a wall of said chamber 10;
- a storage tank for domestic hot water or the like 11, connected in a hydraulic circuit with respect to at least one hot water user R.

According to the invention, said system 100 further comprises:
- first hydraulic serpentine coil means 12, placed above said oven F, in said chamber 10, and hydraulically connected with respect to second hydraulic serpentine coil means 13, arranged in said storage tank 11, in contact (direct or indirect) with the domestic hot water contained therein, said first 12 and said second 13 hydraulic serpentine coil means forming a closed loop hydraulic circuit C;
- a heat storage fluid, circulating in said first 12 and in said second 13 hydraulic serpentine coil means, and
- hydraulic pump means 14 for forced recirculation of said heat storage fluid in said closed loop hydraulic circuit C.

Said first hydraulic serpentine coil means 12 are contained in a support frame 15, forming a modular structure S, inserted in said chamber 10 of the oven F.

Preferably, said hydraulic serpentine coil means 12, 13 are made of copper or a flexible pipe made of stainless steel. Advantageously, said heat storage fluid has a considerably higher boiling point with respect to that of water, in particular is a heat-carrying liquid for solar heating panel; in such a way it is possible to obtain, in said circuit C, heat storage even at higher temperatures (approximately, until 200° C).

In variant (not illustrated) said first hydraulic serpentine coil means 12 are contained in a panel of material with high thermal capacity.

Said open-pit chamber 10 comprises support means (not illustrated) of said first hydraulic serpentine coil means 12, which are movable in a vertical direction inside said chamber 10. Said supporting means include holes at different heights in uprights, in order to receive a respective pin and enable the support of said first hydraulic serpentine coil means 12, at the requested height.

To this end, said first hydraulic serpentine coil means 12 are hydraulically connected in said closed loop hydraulic circuit C, by means of flexible connecting members.

In order to let the heat quantity already contained in said open-pit chamber 10 to be better kept in time, a layer of high thermal capacity insulating material, for example fibreglass, is provided overlying said first hydraulic serpentine coil means 12. According to the present invention, said system 100 comprises a supplementary boiler 16, hydraulically connected to said hot water storage tank 11, to maintain the temperature of the water therein at a preset value.

Said system 100 is adaptable to a pizzas oven or the like F heated with firewood or the like, heated with firewood or the like and/or methane gas, LPG or the like respectively.

Said heat recovery system from a pizza oven or the like 100 according to the invention thus has a simple structure, easy to adapt and simple standardization, which implementation is possible without relevant construction operations.

Adding to this, said system 100 according to the invention utilizes a storage fluid having a boiling point higher than the one of water, so that it allows the heat storage even at higher temperatures.

On the other hand, said system 100 has a simple structure, of easy installation and following maintenance, and relatively low cost.

As will be clear from the foregoing, the present invention allows the objects set forth in the introduction of the present description to be achieved in a simple and effective manner.

## Claims

1. A heat recovery system (100) from a pizza oven or the like (F), comprising:
- an open-pit chamber (10), containing said pizza oven or the like (F), constituted by a structural unit not communicating with said chamber (10), with opening (A) passing through a wall of said chamber (10);
- a storage tank for domestic hot water or the like (11), connected in a hydraulic circuit with respect to at least one hot water user (R);
**characterized in that** it comprises:
- first hydraulic serpentine coil means (12), placed above said oven (F), in said chamber (10), and hydraulically connected with respect to second hydraulic serpentine coil means (13), arranged in said storage tank (11), in direct or indirect contact with the domestic hot water contained therein, said first (12) and said second (13) hydraulic serpentine coil means forming a closed loop hydraulic circuit (C);
- a heat storage fluid, circulating in said first (12) and in said second (13) hydraulic serpentine coil means, and
- hydraulic pump means (14) for forced recirculation of said heat storage fluid in said closed loop hydraulic circuit (C).

2. The heat recovery system (100) according to claim 1, **characterized in that** said first hydraulic serpentine coil means (12) are supported by means of a support frame (15).

3. The heat recovery system (100) according to claim 1 or 2, **characterized in that** said first hydraulic serpentine coil means (12) are contained in a panel of material with high thermal capacity.

4. The heat recovery system (100) according to one or more of the preceding claims, **characterized in that** said first serpentine coil means (12) form a modular structure (S) with said frame (15), inserted in said chamber (10) of the oven (F) underneath a layer of insulating material.

5. The heat recovery system (100) according to claim 1, **characterized in that** said system (100) comprises a supplementary boiler (16), hydraulically connected to said hot water storage tank (11), to maintain the temperature of the water therein at a preset value.

6. The heat recovery system (100) according to one or more of the preceding claims, **characterized in that** said pizza oven (F) is heated with firewood or the like.

7. The heat recovery system (100) according to one or more of the preceding claims, **characterized in that** said pizza oven (F) is heated with firewood or the like and/or methane gas, LPG or the like.

8. The heat recovery system (100) according to one or more of the preceding claims, **characterized in that** said first (12) and said second (13) hydraulic serpentine coil means comprise at least a respective serpentine coil (12, 13) made of copper or a flexible pipe made of stainless steel.

9. The heat recovery system (100) according to claim 1, **characterized in that** said heat storage fluid has a considerably higher boiling point with respect to that of water, in particular is a heat-carrying liquid for solar heating panel.

10. The heat recovery system (100) according to claim 1, **characterized in that** it comprises support means carrying said first serpentine coil means (12), supported movable in a vertical direction inside said chamber (10),
and **in that**
said first serpentine coil means (12) are hydraulically connected in said closed loop hydraulic circuit (C), by means of flexible connecting members, to allow said first serpentine coil means (12) to be arranged at different heights in said open-pit chamber (10).
